# EUROPÄISCHE PATENTSCHRIFT

(11) **EP 2 062 021 B1**
(45) Veröffentlichungstag und Bekanntmachung des Hinweises auf die Patenterteilung: **06.10.2010**
(21) Anmeldenummer: 07787556.5
(22) Anmeldetag: 16.07.2007
(51) Int. Cl.: G01L 27/00

(54) **VERFAHREN UND VORRICHTUNG ZUR DIAGNOSE VON FLÜSSIGKEITSVERLUSTEN IN MIT DRUCK ÜBERTRAGENDEN FLÜSSIGKEITEN GEFÜLLTEN DRUCKMESSAUFNEHMERN**
METHOD AND APPARATUS FOR THE DIAGNOSIS OF LOSSES OF LIQUID IN PRESSURE MEASURING SENSORS FILLED WITH PRESSURE-TRANSMITTING LIQUIDS
PROCÉDÉ ET DISPOSITIF DIAGNOSTIC DE PERTES DE LIQUIDE DANS DES CAPTEURS DE MESURE DE PRESSION REMPLIS DE LIQUIDES TRANSMETTEURS DE PRESSION

(30) Priorität: 12.09.2006 DE 102006043499
(43) Veröffentlichungstag der Anmeldung: 27.05.2009
(73) Patentinhaber: Endress+Hauser GmbH+Co. KG, 79689 Maulburg (DE)
(72) Erfinder: DANNHAUER, Wolfgang, D-06792 Sandersdorf (DE)
(74) Vertreter: Andres, Angelika Maria
(86) Internationale Anmeldenummer: PCT/EP2007/057288
(87) Internationale Veröffentlichungsnummer: WO 2008/031658

(56) Entgegenhaltungen:
- WO-A-2005/026682
- DE-A1- 3 705 900
- DE-A1- 3 705 901
- DE-A1- 10 132 269
- DE-A1-102004 019 222
- US-A- 4 543 832

## Beschreibung

Die Erfindung betrifft ein Verfahren und eine Vorrichtung zur Diagnose von Flüssigkeitsverlusten in mit Druck übertragenden Flüssigkeiten gefüllten Druckmessaufnehmern.

Druckmessaufnehmer werden in nahezu allen Industriezweigen zum Messen von Drücken eingesetzt. Die gemessen Druckwerte werden z.B. zum Steuern, Regeln und/oder Überwachen eines industriellen Herstellungs- und/oder Verarbeitungsprozesses eingesetzt.

In der Druckmesstechnik werden gerne so genannte Halbleiter-Senaoren, z.B. Silizium-Chips mit eindotierten Widerstandselementen, als druckempfindliche Elemente eingesetzt. Üblicherweise weist ein solcher Drucksensor einen membranförmigen Drucksensor-Chip auf, der in einer Druckmesskammer aufgebracht ist. Drucksensor-Chips sind in der Regel sehr empfindlich und werden deshalb nicht direkt einem Medium ausgesetzt, dessen Druck aufgenommen werden soll. Stattdessen ist ein mit einer Flüssigkeit gefüllter Druckmittler mit einer äußeren Trennmembran vorgeschaltet. Im Betrieb wird der zu messende Druck an die Trennmembran angelegt und über den Druckmittler auf den in der Druckmesskammer befindlichen Drucksensor-Chip übertragen. Das gilt sowohl für die Messung von absoluten Drücken, als auch für die Messung von Relativdrücken und Differenzdrücken.

Das Innenvolumen von Druckmittler und Messkammer ist bei einwandfrei arbeitenden Messaufnehmern flüssigkeitsdicht verschlossen. Es besteht jedoch die Gefahr, dass der Druckmessaufnehmer derart beschädigt wird, dass Flüssigkeit aus diesem Innenvolumen austritt. Dies kann z.B. durch eine mechanische Beschädigung der Trennmembran oder durch undichte Stellen im Bereich der Befestigung der Trennmembran, an der Befüllöffnung, über die die Flüssigkeit eingefüllt wurde, oder im Bereich von Durchführungen, z.B. für Anschlussleitungen des Drucksensor, auftreten. Der Flüssigkeitsverlust führt zu einer Veränderung der Messeigenschaften des Messaufnehmers. Je nach dem, wie groß der Flüssigkeitsverlust ist, kann dieser zu einer Reduzierung der Messgenauigkeit, zu erheblichen Funktionsstörungen oder im schlimmsten Fall zu einem Totalausfall des Messaufnehmers führen. Erhebliche Funktionsstörungen treten insb. bei tiefen Temperaturen und/oder bei hohen auf den Druckmessaufnehmer einwirkenden Drücken auf.

Zusätzlich kann die austretende Flüssigkeit Schäden anrichten, wenn sie, z.B. durch einen Riss in der Trennmembran, in einen industriellen Herstellungsprozess gelangt und sich mit den dort zu verarbeitenden Produkten vermischt.

In der DE-A 10 2004 019 222 ist eine Vorrichtung und ein Verfahren zur

Diagnose von Flüssigkeitsverlusten in mit Druck übertragenden Flüssigkeiten gefüllten Druckmessaufnehmern beschrieben, bei der in der Druckmesskammer des Druckmessaufnehmers ein Prüfelement angeordnet ist, dessen Volumen durch eine entsprechende Ansteuerung zu Diagnosezwecken vergrößert werden kann. Eine Vergrößerung des Volumens führt zu einem Druckanstieg in der Druckmesskammer, der dann mittels des Drucksensors aufgezeichnet wird. Die Diagnose der Leckage erfolgt in dem der zeitliche Verlauf eines durch eine Volumenvergrößerung bewirkten Druckanstiegs mit dem Drucksensor aufgezeichnet wird, und mit einer entsprechenden Referenzkurve des intakten Druckmessaufnehmers verglichen wird. Dabei bewirkt ein Flüssigkeitsverlust, dass der durch eine definierte Volumenvergrößerung ausgelöste maximale Druckanstieg geringer ist, als dies bei einem intakten Druckmessaufnehmer der Fall wäre. Zusätzlich kann durch die Volumenvergrößerung Flüssigkeit aus dem Druckmessaufnehmer heraus gepresst werden. Dies führt dann beispielsweise zu einem zeitverzögerten Abfall des Drucks in der Druckmesskammer, der sich in der während der Diagnose aufgezeichneten Kennlinie wieder spiegelt.

Eine vergleichbare Vorrichtung and ein zugehöriges Verfahren wird ebenfalls die WO2005/026682 A1 offenbart.

Diese Methode weist den Nachteil auf, dass der durch die Volumenvergrößerung des Prüfelements erzielbare Messeffekt nur verhältnismäßig gering ist. Der Grund hierfür liegt darin, dass Trennmembranen in der Regel möglichst dünn sind und eine möglichst geringe Federsteifigkeit aufweisen, um eine möglichst unverfälschte Übertragung des außen an der Trennmembran anliegenden Drucks zu erzielen. Leckagen lassen sich auf diese Weise erst dann erkennen, wenn bereits eine verhältnismäßig große Flüssigkeitsmenge ausgetreten ist. Dies hat zur Folge, dass in der Regel nur große Beschädigungen der Trennmembran erkannt werden können, kleinere Leckagestellen, z.B. im Bereich der Trennmembran, an anderen mechanischen Komponenten oder an Fügestellen, bei denen nur geringe Flüssigkeitsverluste auftreten, jedoch unentdeckt bleiben.

Ein weiterer Nachteil besteht darin, dass der Druck in der Druckmesskammer während der Diagnose erhöht wird. Durch diese Druckerhöhung wird bei Vorliegen eines Lecks unter Umständen noch mehr Flüssigkeit aus dem Druckmessaufnehmer heraus gepresst.

Es ist eine Aufgabe der Erfindung ein Verfahren und eine Vorrichtung zur Diagnose von Flüssigkeitsverlusten in mit Druck übertragenden Flüssigkeiten gefüllten Druckmessaufnehmern anzugeben.

Hierzu besteht die Erfindung in einem Druckmessaufnehmer mit

- einem in einer Druckmesskammer angeordneten Drucksensor,

- einem an die Druckmesskammer angeschlossenen Druckmittler,

-- der nach außen von einer Trennmembran abgeschlossen ist,

--- auf deren Außenseite im Messbetrieb ein zu messender Druck einwirkt,

- der einen abgeschlossenen Innenraum umfasst,

-- der die Innenräume des Druckmittlers und der Druckmesskammer umfasst,

-- der mit einer Druck übertragenden Flüssigkeit gefüllt ist,

--- die im Messbetrieb dazu dient einen auf die Trennmembran einwirkenden

Druck auf den Drucksensor zu übertragen, und

- einer Vorrichtung zur Diagnose von Flüssigkeitsverlusten,

-- die ein in dem abgeschlossenen Innenraum angeordnetes Prüfelement

aufweist, dessen im Innenraum befindliches Außenvolumen zur Diagnose von

Flüssigkeitsverlusten reduzierbar ist,

-- die eine Auswerteinheit aufweist,

--- die während der Diagnose dazu dient, einen vom Drucksensor

gemessenen Druck in Abhängigkeit von einer Volumenreduzierung des

Prüfelements zu erfassen, und

--- anhand dieses in Abhängigkeit von der Volumenreduzierung gemessenen

Drucks erkennt ob Flüssigkeit ausgetreten ist.

Gemäß einer Weiterbildung ist die maximal erzielbare Volumenreduktion des Prüfelements in Abhängigkeit von einem zwischen der Trennmembran und deren Membranbett im unbelasteten Zustand eingeschlossenen Flüssigkeitsvolumen so ausgelegt, dass die Trennmembran an deren Membranbett anliegt, wenn das Prüfelement sein Minimalvolumen einnimmt.

Gemäß einer ersten Ausgestaltung umfasst das Prüfelement ein piezoelektrisches Element, dessen Volumen durch Anlegen einer elektrischen Spannung reduzierbar ist.

Gemäß einer zweiten Ausgestaltung ist das Prüfelement ein mikromechanischer Faltenbalg.

Gemäß einer dritten Ausgestaltung umfasst das Prüfelement einen beweglichen Kolben.

Weiter umfasst die Erfindung ein Verfahren zur Diagnose von Flüssiakeitsverlusten in erfindungemäßen Druckmessaufnehmern, bei dem

- das Volumen des Prüfelements solange reduziert wird, bis entweder

ein nicht-linearer Abfall des gemessenen Drucks auftritt, oder bis eine

Obergrenze für die Volumenreduktion erreicht wird, und

- beim Auftreten eines nicht-linearen Abfalls die zugehörige

Volumenreduktion mit einem bei intaktem Druckmessaufnehmer

aufgezeichneten Referenzwert verglichen wird, und

- ein gegebenenfalls eingetretener Flüssigkeitsverlust anhand einer Differenz

der zugehörigen Volumenreduktion und des Referenzwertes quantifiziert

wird.

Gemäß einer Weiterbildung dieses Verfahrens werden die Diagnosen wiederkehrend ausgeführt, es wird ein zeitlicher Verlauf der gegebenenfalls eingetretenen Flüssigkeitsverluste bestimmt, und es werden anhand dieses Verlaufs Vorhersagen über die Zuverlässigkeit des Messaufnehmers, dessen zu erwartende Lebensdauer und/oder einen Wartungs- oder Austauschbedarf abgeleitet.

Weiter umfasst die Erfindung ein Verfahren zur Diagnose von Flüssigkeitsverlusten erfindungsgemäßer Druckmessaufnehmer, bei dem

- das Volumen des Prüfelements auf ein Testvolumen reduziert

wird,

- der zugehörige mit dem Drucksensor gemessene Druck erfasst wird, und

- mit einem vorgegebenen Referenzdruck verglichen wird, und

- anhand dieses Vergleichs festgestellt wird, ob ein Flüssigkeitsverlust vorliegt.

Gemäß einer ersten Weiterbildung des letztgenannten Verfahrens, wird der gemessene Druck mit einem Referenzwert verglichen, und die Auswerteeinheit diagnostiziert einen Flüssigkeitsverlust, wenn der gemessene Druck geringer als der Referenzwert ist.

Gemäß einer Weiterbildung hierzu wird ein diagnostizierter Flüssigkeitsverlust anhand der Differenz zwischen dem gemessenen Druck und dem Referenzwert quantifiziert.

Gemäß einer zweiten Weiterbildung des letztgenannten Verfahrens, wird der gemessene Druck mit einem Referenzwert verglichen, und die Auswerteeinheit diagnostiziert eine Beschädigung, die zu einem Druckausgleich mit der Umgebung führt, wenn der gemessene Druck größer als der Referenzwert ist.

Die Erfindung und weitere Vorteile werden nun anhand der Figuren der Zeichnung, in denen drei Ausführungsbeispiele dargestellt sind, näher erläutert; gleiche Elemente sind in den Figuren mit gleichen Bezugszeichen versehen.

Fig. 1 zeigt einen Schnitt durch einen erfindungsgemäßen

Druckmessaufnehmer;

Fig. 2 zeigt einen Ausschnitt eines Druckmessaufnehmers mit einem

Federbalg als Prüfelement;

Fig. 3 zeigt einen Ausschnitt eines Druckmessaufnehmers, bei dem das

Prüfelement einen Kolben umfasst;

Fig. 4 zeigt ein Blockschaltbild eines Druckmessaufnehmers;

Fig. 5 zeigt eine Referenzkennlinie des Druckmessaufnehmers von Fig. 1;

Fig. 6 zeigt mehrere bei unterschiedlichen Flüssigkeitsverlusten aufgenommene Diagnose-Kennlinien des Druckaufnehmers von

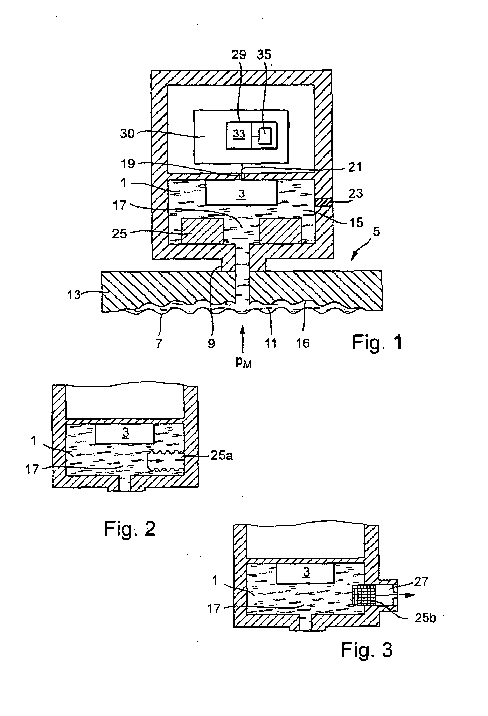

Fig. 1; und

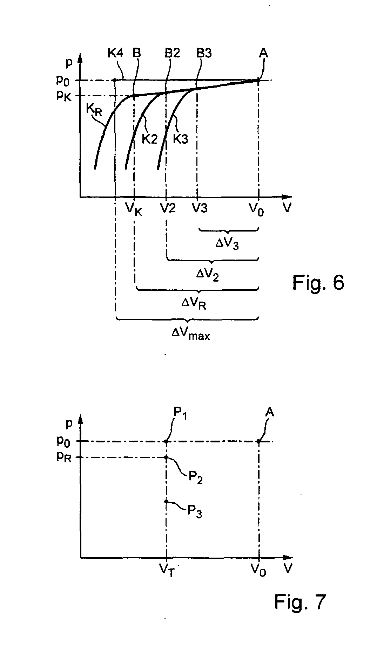

Fig. 7 zeigt mehrere bei unterschiedlichen Flüssigkeitsverlusten bei einem

vorgegebenen Testvolumen des Prüfelements aufgenommene

Messpunkte des Druckaufnehmers von Fig. 1.

Fig. 1 zeigt einen Schnitt durch einen erfindungsgemäßen Druckmessaufnehmer mit einem in einer Druckmesskammer 1 angeordneten Drucksensor 3, z.B. einen Halbleiter-Sensor. Hierzu eignen sich z.B. Silizium-Chips mit eindotierten Widerstandselementen. Bei dem dargestellten Druckmessaufnehmer handelt es sich um einen Abaolutdruckmessaufnehmer. Entsprechend ist der Drucksensor 3 hier ein Absolutdrucksenaor. Die Erfindung ist jedoch nicht auf Absolutdruckmessaufnehmer beschränkt, sondern in analoger Form auch in Relativdruckmessaufnehmenn und Differenzdruckmessaufnehmern einsetzbar.

An die Druckmesskammer 1 ist ein Druckmittler 5 angeschlossenen, der nach außen von einer Trennmembran 7 abgeschlossen ist. Im Messbetrieb wirkt ein zu messender Druck p_{M} von außen auf die Trennmembran 7 ein. Der Druckmittler 5 umfasst in dem dargestellten Ausführungsbeispiel eine kurze Kapillarleitung 9, die in einer nach außen von der Trennmembran 7 abgeschlossenen Druckempfangskammer 11 eines Membranträgers 13 mündet.

Der Druckmessaufnehmer weist einen abgeschlossenen Innenraum 15 auf, der die Innenräume der Druckmesskammer 1 und des Druckmittlers 5 umfasst. Der Innenraum des Druckmittlers 5 setzt sich zusammen aus dem Innenraum der Kapillarleitung 9 und dem Innenraum der Druckempfangskammer 11. Dieser abgeschlossene Innenraum 15 ist mit einer Druck übertragenden Flüssigkeit 17 gefüllt. Die Flüssigkeit 17 ist vorzugsweise eine inkompressible Flüssigkeit mit einem geringen thermischen Ausdehnungskoeffizienten, z.B. ein Silikonöl. Sie dient im Messbetrieb dazu einen außen auf die Trennmembran 7 einwirkenden Druck p_{M} auf den Drucksensor 3 zu übertragen.

Der Membranträger 11 weist ein Membranbett 16 auf, das vorzugsweise der Form der Trennmembran 7 nachempfunden ist. Membranbett 16 und Trennmembran 7 schließen die Druckempfangskammer 11 ein. Das Membranbett 16 dient dem Schutz der Trennmembran 7 vor Überlasten. Wirkt auf die Trennmembran 5 ein Druck p_{M} ein, der eine vorgegebene Obergrenze übersteigt, so legt sich die Trennmembran 7 an das Membranbett 16 an und wird hierdurch vor bleibenden Verformungen oder Beschädigungen geschützt.

Es kann jedoch nicht vollständig ausgeschlossen werden, dass die Trennmembran 7 oder andere Komponenten des Druckmessaufnehmers, z.B. durch Alterungsprozesse oder durch mechanische Einwirkungen von außen beschädigt werden. Hierdurch kann der abgeschlossene Innenraum 15 undicht werden und es kann zu Leckagen kommen, bei denen Flüssigkeit 17 aus dem Innenraum 15 austritt. Besonders anfällig für solche Beschädigungen ist die Trennmembran 7. Leckagen können aber z.B. auch im Bereich der Anschlussstellen der Kapillarleitung 9, im Bereich von Durchführungen 19 für Anschlussleitungen 21 des Drucksensors 3 oder im Bereich einer für die Befüllung des abgeschlossenen Innenraums 15 mit der Flüssigkeit 17 vorgesehenen Befüllöffnung 23 auftreten. Ein Flüssigkeitsverlust führt zu einer Veränderung der Messeigenschaften des Druckmessaufnehmers, die je nach Menge der ausgetretenen Flüssigkeit zu einer Verschlechterung der Messgenauigkeit, zu erheblichen Messstörungen oder sogar zu Totalausfall des Messaufnehmers führen kann. Um damit verbundene Nachteile sowie gegebenenfalls daraus resultierende Gefahren für Mensch und Umwelt zu vermeiden, gilt es Flüssigkeitsverluste möglichst frühzeitig zu erkennen, um sicherheitseierichtet reagieren zu können. Dies kann beispielsweise durch Wartung oder Austausch des Messaufnehmers geschehen.

Hierzu weist der erfindungsgemäße Druckmessaufnehmer eine Vorrichtung zur Diagnose von Flüssigkeitsverlusten auf. Kern dieser Vorrichtung ist ein in dem abgeschlossenen Innenraum angeordnetes Prüfelement 25, dessen im Innenraum 15 befindliches Außenvolumen zur Diagnose von Flüssigkeitsverlusten reduzierbar ist. Ein solches Prüfelement 25 lässt sich auf vielfältige Art und Weise realisieren. In dem in Fig. 1 dargestellten Ausführungsbeispiel umfasst das Prüfelement 25 ein hier ringförmiges piezoelektrischen Element, dessen Volumen durch Anlegen einer elektrischen Spannung reduzierbar ist.

In den Figuren 2 und 3 ist jeweils ein die Druckmesskammer 1 enthaltender Ausschnitt des Druckmessaufnehmers dargestellt, in dem zwei weitere Ausführungsbeispiele für Prüfelemente angeordnet sind. Bei dem in Fig. 2 dargestellten Prüfelement handelt es sich um einen mikromechanischen Faltenbalg 25a, dessen Außenvolumen ebenfalls durch eine entsprechende elektrischen Ansteuerung reduzierbar ist. Dies ist durch einen Pfeil im Inneren des Faltenbalgs 25a symbolisch dargestellt.

Bei dem in Fig. 3 dargestellten Ausführungsbeispiel umfasst das Prüfelement einen in die Messkammer 1 hinein ragenden Kolben 25b, der beispielsweise mittels eines in Fig. 3 nicht dargestellten Schrittmotors ganz oder teilweise aus der Druckmesskammer 1 heraus geführt werden kann. Dies ist ebenfalls durch einen Pfeil angedeutet. Dabei wird der Kolben 25b in eine an die -Druckmesskammer 1 angrenzende von dieser flüssigkeitsdicht abgetrennte Ausnehmung 27 eingeführt. Durch diese Bewegung reduziert sich das in der Druckmesskammer 1 befindliche Außenvolumen des Kolbens 25b.

Die maximal erzielbare Volumenreduktion ΔV ₘₐₓ des jeweiligen Prüfelements 25, 25a, bzw. 25b ist in Abhängigkeit von einem zwischen der Trennmembran 7 und deren Membranbett 16 in der Druckempfangskammer 11 im unbelasteten stand eingeschlossenen Flüssigkeitsvolumen vorzugsweise so aufgelegt, dass die Trennmembran 7 an deren Membranbett 16 anliegt, wenn das Prüfelement 25 sein Minimalvolumen einnimmt.

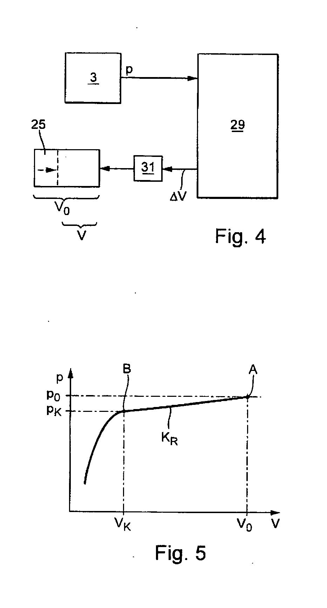

Neben dem Prüfelement 25 umfasst die Vorrichtung eine Auswerteinheit 29, die während der Diagnose dazu dient, einen vom Drucksensor 3 gemessenen Druck p in Abhängigkeit von der Volumenreduzierung ΔV des Prüfelements 25 zu erfassen. Die Auswerteeinheit 29 ist beispielsweise in einer Messelektronik 30 des Druckmessaufnehmers integriert und über entsprechende Anschlussleitungen an den Drucksensors 3 und an das Prüfelement 25 abgeschlossen. Fig. 4 zeigt ein vereinfachtes Blockschaltbild hierzu. Dort ist die Auswerteeinheit 29 über eine Steuereinheit 31 an das Prüfelement 25 abgeschlossen. Während der Diagnose sendet die Auswerteinheit 29 Steuersignale an die Steuereinheit 31, die dann wiederum eine elektrische Ansteuerung des Prüfelements 25 bewirkt, die eine dem Steuersignal entsprechende Volumenreduzierung ΔV des Prüfelements 25 bewirkt. Die Ansteuerung des Prüfelements 25 kann natürlich auch auf andere Weise, z.B. durch die Messelektronik 30, erfolgen. In dem Fall ist die Information über das aktuelle Außenvolumen des Prüfelements 25 der Auswerteeinheit 29 beispielsweise über ein entsprechendes Ausgangssignal der steuernden Einheit zuzuführen.

Die eigentliche Diagnose erfolgt dann in der Auswerteinheit 29. Diese erkennt anhand des in Abhängigkeit von der Volumenreduzierung ΔV gemessenen Drucks p, ob Flüssigkeit ausgetreten ist. Dies geschieht vorzugsweise durch einen Vergleich der während der Diagnose ausgeführten Messungen des Drucksensors 3 in Abhängigkeit der ausgeführten aktuellen Volumenreduktion ΔV des Prüfelements 25 mit entsprechenden Referenzmessungen. Anstelle der Volumenreduktion ΔV kann natürlich genauso gut das zugehörige im Innenraum 15 befindliche Außen volumen des Prüfelements 25 verwendet werden. Beide Größen sind über das Ausgangsvolumen V ₀ des Prüfelements 25 ineinander umrechenbar und damit gleichwertig.

Fig. 5 zeigt eine Referenzkennlinie K_{R}, eines intakten vollständig mit Flüssigkeit gefüllten Druckmessaufnehmers, bei der der mit dem Drucksensor 3 aufgenommene Druck p in Abhängigkeit vom Volumen V des Prüfelements 25 dargestellt ist. Ausgangspunkt A der Kennlinie ist dabei das Ausgangsvolumen V ₀ des Prüfelements 25. Dort herrscht der Innendruck p ₀. Ausgehend von diesem Ausgangspunkt A bewirkt eine kontinuierliche Reduktion des Volumens des Prüfelements 25 zunächst einen langsamen stetigen Abfall des gemessenen Drucks p in der Druckmesskammer 1, der im Wesentlichen proportional zum Außenvolumen V des Prüfelements 25 abnimmt. Durch den durch die Volumenreduktion erzeugten Unterdruck wird die Trennmembran 7 solange auf deren Membranbett 16 zu bewegt, bis sie an diesem anliegt. Dabei fließt Flüssigkeit aus der Druckempfangskammer 11 in die Druckmesskammer 1. In dem Moment, in dem sich die Trennmembran 7 ihrem Membranbett 16 nähert, erhöht sich die Federsteifigkeit der Trennmembran 7 sprunghaft. Dies führt dazu, dass eine weitere Absenkung des Außenvolumens des Prüfelements 25 zu einem drastischen nicht-linearen Abfall des gemessenen Drucks p in Abhängigkeit von der weiteren Reduktion des im Innenraum 15 befindlichen Außenvolumen V des Prüfelements 25 führt. Aufgrund der drastischen Veränderung der Federsteifigkeit der Trennmembran 7 führt dies zu einem erheblich größeren Messeffekt, als der Messeffekt, der durch die im Stand der Technik beschriebene Ausdehnung des Außenvolumens erzielbar ist. Dort wird die Trennmembran nach außen vom Membranbett weg bewegt. Dabei treten keine drastischen Veränderungen des Übeilraounosverhaltens ein.

Die Grenze zwischen diesen beiden Bereichen ist in Fig. 5 durch den Messpunkt B angegeben, an dem bei einem Außenvolumen V ₖ des Prüfelements 25 der Druck pₖ herrscht. Die am Messpunkt B vorliegende Volumenreduktion ΔV _{R} = V₀ - Vₖ von dem Ausgangsvolumen V ₀ auf das Volumen V ₖ ist abhängig von dem unter der Trennmembran 7 im unbelasteten Zustand eingeschlossen Volumen und kann im Rahmen der nachfolgend näher erläuterten Diagnose zur Quantifizierung eines gegebenenfalls vorliegenden Flüssigkeitsverlustes herangezogen werden.

Mit dem erfindungsgemäßen Druckmessaufnehmer sind verschiedene Verfahren zur Diagnose von Flüssigkeitsverlusten ausführbar.

Gemäß einem ersten Verfahren wird das Volumen V ausgehend von dem Ausgangsvolumen V ₀ des Prüfelements 25 solange reduziert wird, bis entweder der zuvor beschriebene nicht-lineare Abfall des gemessenen Drucks p in Abhängigkeit von dem Volumen V des Prüfelements 25 auftritt, oder bis eine Obergrenze für die Volumenreduktion, z.B. die maximal mögliche Volumenreduktion ΔV ₘₐₓ, erreicht wird. Das Auftreten eines nicht-linearen Abfalls wird von der Auswerteinheit 29 überwacht. Dies geschieht beispielsweise durch entsprechende Auswertealgorithmen, die die Steigung

der jeweils aufgenommenen Diagnose-Kennlinien Kₓ in Abhängigkeit von der zugehörigen Volumenreduktion ΔVₓ berechnen und diese mit der Steigung an einem vorangehenden Messpunkt oder mit einem vorgegebenen·Referenzsteigung verglichen. Tritt ein nicht-linearer Abfall auf, so wird die zugehörige Volumenreduktion ΔVₓ am zugehörigen Messpunkt Bₓ mit einem bei intaktem Druckmessaufnehmer aufgezeichneten Referenzwert R verglichen, und es wird ein gegebenenfalls eingetretene Flüssigkeitsverlust Lₓ anhand einer Differenz der zugehörige Volumenreduktion ΔVₓ und des Referenzwertes R quantifiziert. Der eingetretene Flüssigkeitsverlust Lₓ entspricht der Differenz der zugehörigen Volumenreduktion ΔVₓ und des Referenzwertes R.

Die Volumenreduktion ΔV kann schrittweise oder kontinuierlich erfolgen. Die entsprechenden Messpunkte bzw. Messkurven werden in der Auswerteeinheit 29 ausgewertet. Hierzu weist die Auswerteeinheit 29 vorzugsweise einen Mikroprozessor 33 auf, in dem in einem Speicher 35 abgelegte Auswertungsalgorithmen ausgeführt werden. Werden nur vereinzelte Messpunkte der jeweiligen Diagnose-Kennlinie K bestimmt, so kann die Genauigkeit der Bestimmung der relevanten Volumenreduktion ΔV bzw. des jeweiligen Messpunktes B durch Interpolation weiter verbessert werden.

Fig. 6 zeigt entsprechende Diagnose-Kennlinien. Als Beispiel wurde ein Druckmessaufnehmer gewählt, bei dem sich im unbelastet vollständig mit Flüssigkeit gefüllten Zustand ein Flüssigkeitsvolumen von 300 mm³ in der Druckempfangskammer 11 unter der Trennmembran 7 befindet.

Die Diagnose-Kennlinie K_{R} entspricht der in Fig. 5 dargestellten Referenzkennlinie K_{R} des intakten vollständig gefüllten Druckmessaufnehmers. Die Diagnose-Kennlinie K_{R} weist zwischen den Messpunkten A und B den bereits beschriebenen linearen Verlauf auf. Am Messpunkt B befindet sich die Trennmembran 7 so dicht an ihrem Membranbett 16, dass deren Steifigkeit drastisch ansteigt. Eine weitere Reduktion des Außenvolumens unter das zugehörige Volumen V ₖ führt zu dem drastischen Druckabfall. Die zugehörige Volumenreduktion ΔV _{R} = V₀ - Vₖ beträgt bei dem angegebenen Zahlenbeispiel 260 mm³ und bildet den Referenzwert R für die Quantifizierung von gegebenenfalls eingetretenen Flüssigkeitsverlusten L. Die Koordinaten des Messpunkts B können z.B. durch eine Auswertung der Steigung der Diagnose-Kennlinie K_{R} von der Auswerteeinheit 29 bestimmt werden.

Die zweite Diagnose-Kennlinie K2 wurde mit dem gleichen Druckmessaufnehmer aufgezeichnet, bei dem ein Flüssigkeitsverlust einer Flüssigkeitsmenge L2 stattgefunden hat. Auch hier beginnt die Diagnose-Kennlinie K2 am Startpunkt A, an dem das Prüfelement 25 das Ausgangsvolumen V ₀ aufweist und in der Druckmesskammer 1 der Druck p₀ herrscht. Aufgrund des Flüssigkeitsverlustes L2 nähert sich Trennmembran 7 durch die Reduktion des Volumens des Prüfelements 25 jedoch bereits viel frührer ihrem Membranbett 16. Der entsprechende durch die Auswerteeinheit 29 zu ermittelnde Messpunkt B2, an dem die Diagnose-Kennlinie K2 nicht mehr linear verläuft, wird daher schon bei einem Volumen V2 erreicht. Die zugehörig Volumenreduktion ΔV₂ = V₀ - V2 beträgt bei dem angegebenen Zahlenbeispiel 210 mm³. Die Differenz zwischen dieser Volumenreduktion ΔV₂ und dem Referenzwert R beträgt hier 50 mm³ und ist ein Maß für den Flüssigkeitsverlust L2. Das gleiche Ergebnis erhält man natürlich, wenn man das Volumen Vₖ am Messpunkt B der Referenzkennlinie als Referenzwert R' heranzieht und die Differenz zwischen diesem Referenzwert R' und dem Volumen V2 des Prüfelements 25 am Messpunkt B2 bestimmt.

Die dritte Diagnose-Kennlinie K3 wurde mit dem gleichen Druckmessaufnehmer aufgezeichnet, bei dem ein Flüssigkeitsverlust L3 stattgefunden hat, der größer als der Flüssigkeitsverlust L2 ist. Auch hier beginnt die Diagnose-Kennlinie K3 am Startpunkt A, an dem das Prüfelement 25 das Ausgangsvolumen V ₀ aufweist und in der Druckmesskammer der Druck p₀ herrscht. Aufgrund des vergrößerten Flüssigkeitsverlustes nähen sich Trennmembran 7 durch die Reduktion des Volumens des Prüfelements 25 jetzt noch frührer ihrem Membranbett 16. Der entsprechende durch die Auswerteeinheit 29 zu ermittelnde Messpunkt B3, an dem die Diagnose-Kennlinie K3 nicht mehr linear verläuft, wird daher schon bei einem Volumen V3 erreicht. Die zugehörige Volumenreduktion ΔV₃ = V₀- V3 beträgt bei dem angegebenen Zahlenbeispiel 160 mm³. Die Differenz zwischen dieser Volumenreduktion ΔV₃ und dem Referenzwert R beträgt hier 100 mm³ und ist ein Maß für die verlorene Flüssigkeitsmenge L3. Das gleiche Ergebnis erhält man natürlich, wenn man das Volumen V ₖ au Messpunkt B der Referenzkennlinie als Referenzwert R' heranzieht und die Differenz zwischen diesem Referenzwert R' und dem Volumen V3 des Prüfelements 25 am Messpunkt B3 bestimmt.

Die vierte Diagnose-Kennlinie K4 wurde mit dem gleichen Druckmessaufnehmer aufgezeichnet, wobei der Druckmessaufnehmer so stark beschädigt wurde, dass ein Druckausgleich mit der Umgebung erfolgt. Dies ist beispielsweise dann der Fall, wenn die Trennmembran 7 einen Riss oder ein Loch aufweist. In diesem Fall bewirkt die Volumenreduktion des Prüfelements 25 keine Druckabsenkung in der Druckmesskammer 15. Der mit dem Drucksensor 3 aufgenommene Druck p bleibt konstant. Die Diagnose-Kennlinie K4 weist keinen Bereich mehr auf, in dem der gemessene Druck p in Abhängigkeit vom Volumen V des Prüfelements 25 nicht-linear verläuft. In diesem Fall wird das Diagnoseverfahren solange fortgeführt, bis eine vorgegebene Obergrenze, hier ΔV ₘₐₓ, für die Volumenreduktion erreicht wird und danach abgebrochen. Als Obergrenze kann alternativ auch die am Messpunkt B der Referenzkennlinie vorliegende Volumenreduktion ΔV_{R} verwendet werden.

Vorzugsweise wird dieses Diagnoseverfahren wiederkehrend ausgeführt, und es wird ein zeitlicher Verlauf der gegebenenfalls eingetretenen Flüssigkeitsverluste L bestimmt. Anhand dieses zeitlichen Verlaufs werden dann Vorhersagen über die Zuverlässigkeit des Druckmessaufnehmers, dessen zu erwartende Lebensdauer und/oder einen Wartungs- oder Austauschbedarf abgeleitet. Dies kann auf sehr vielfältige an die jeweiligen Bedingungen und Anforderungen am Einsatzort angepasste Weise erfolgen. Bei Anwendungen, bei denen jeglicher Flüssigkeitsaustiitt zu vermeiden ist, wird auch ein noch so kleiner diagnostizierter Flüssigkeitsverlust dazu verwendet, einen Alarm und/oder einen sofortigen Austausch des Druckmessaufnehmers auslösen. Bei anderen Anwendungen kann beispielsweise eine Obergrenze für den Flüssigkeitsverlust L vorgegeben werden. Wird diese Obergrenze erreicht, so meldet der Druckmessaufnehmer einen Wartungs- bzw. Austauschbedarf oder löst einen Alarm aus. Zusätzlich kann vor dem erreichen dieser Obergrenze anhand der zeitlichen Entwicklung der eingetretenen Flüssigkeitsverluste L die verbleibende Lebensdauer, z.B. die bis zum Erreichen der Obergrenze voraussichtlich verbleibende Zeit, abgeschätzt werden, und vom Druckmessaufnehmer ausgegeben werden.

Alternativ zu den zuvor beschriebenen Verfahren, bei denen das Außenvolumen schrittweise oder kontinuierlich reduziert wird, und entsprechende Diagnose-Kennlinien aufgezeichnet werden, sind mit dem erfindungsgemäßen Druckmessaufnehmer auch Diaoncseveifahren ausführbar, bei denen jeweils nur ein einziger Messpunkt P aufgenommen wird. Fig. 7 zeigt ein Ausführungsbeispiel hierzu. Dabei wird das im Innenraum 15 befindliche Volumen V des Prüfelements 25 auf ein vorgegebenes Testvolumen V_{T} reduziert und es wird der zugehörige mit dem Drucksensor 3 gemessene Druck p_{T} erfasst. Nachfolgend wird der gemessene Druck p_{T} mit einem vorgegebenen Referenzdruck p_{R} verglichen, und anhand dieses Vergleichs festgestellt, ob ein Flüssigkeitsverlust L vorliegt. Als Referenzdruck p_{R} wird vorzugsweise der bei erreichen des Testvolumens V_{T} vorliegende Druck p(V_{T}) der Referenzkennlinie K_{R} verwendet. Liegt der bei Erreichen des Testvolumens V_{T} gemessene Druck p_{T} oberhalb des Referenzdrucks p_{R} so hat ein Druckausgleich mit der Umgebung stattgefunden. Dies ist in dem in Fig. 7 dargestellten Ausführungsbeispiel beim Messpunkt P1 der Fall. Ist der gemessene Druck p ungefähr gleich dem Referenzdruck P_{R}, so kann davon ausgegangen werden, dass der Druckmessaufnehmer einwandfrei arbeitet. Dies ist in Fig. 7 durch den Messpunkt P2 dargestellt. Liegt der gemessene Druck p unterhalb des Referenzdrucks p_{R} so hat ein Flüssigkeitsverlust L stattgefunden. Dies ist in Fig. 7 durch den Messpunkt P3 dargestellt.

Entsprechend den obigen Ausführungen diagnostiziert die Auswerteeinheit 29 einen Flüssigkeitsverlust L, wenn der gemessene Druck p(V _{T}) geringer als der Referenzwert p_{R} ist. Zusätzlich kann ein auf diese Weise diagnostizierter Flüssigkeitsverlust L anhand der Differenz zwischen dem gemessenen Druck p(V _{T}) und dem Referenzwert p _{R} quantifiziert werden. Hierzu können beispielsweise Referenzmessungen herangezogen werden, bei denen bei vorgegebenen Flüssigkeitsverlusten die jeweilige Differenz zwischen dem gemessenen Druck p(V _{T}) und dem Referenzwert p_{R} bestimmt wird. Alternativ kann der Flüssigkeitsverlust L durch einen Vergleich der vorliegenden Differenz mit den entsprechenden Differenzen, die sich aus den anhand von Fig. 6 beschriebenen Kennlinien ergeben, quantifiziert oder abgeschätzt werden.

Ist der gemessen Druck p(V_{T}) größer als der Referenzdruck p_{T}, so diagnostiziert die Auswerteeinheit 29 eine Beschädigung des Druckmessaufnehmers, die zu einem Druckausgleich mit der Umgebung führt.

Die Auswahl des Testvolumen V _{T} wird dabei vorzugsweise in Abhängigkeit von der Größe der zu diagnostizierenden Flüssigkeitsverluste L getroffen. Bei Anwendungen bei denen lediglich das auftreten eines großen Flüssigkeitsverlustes L festgestellt werden soll, z.B. ein Flüssigkeitsverlust, der eine erhebliche Beeinträchtigung der Messgenauigkeit zur Folge hat, kann ein verhältnismäßig großes Testvolumen V _{T} bzw. eine dementsprechend geringe Volumenreduktion ΔV _{T} = V₀ - V_{T} des Prüfelements 25 vorgegeben werden. Die Wahl des Testvolumens V_{T} kann beispielsweise anhand der in Fig. 6 dargestellten Diagnose-Kennlinien K getroffen werden. Soll beispielsweise ein Flüssigkeitsverlust L festgestellt werden, der größer oder gleich 100 mm³ 3 ist, so muss ein Testvolumen V_{T} gewählt werden, dass in den nicht-linearen Bereich der Diagnose-Kennlinie K3 fällt; V_{T} muss also kleiner als V3 sein.

Soll beispielsweise ein Flüssigkeitsverlust L festgestellt werden, der größer oder gleich 50 mm³ ist, so muss ein Testvolumen V _{T} gewählt werden, dass in den nicht-linearen Bereich der Diagnose-Kennlinie K2 fällt; V_{T} muss also kleiner als V2 sein.

Sollen bereits minimale Flüssigkeitsverluste L festgestellt werden, so muss ein Testvolumen V_{T} gewählt werden, dass kleiner oder gleich dem Volumen V ₖ des Prüfelements 25 am Messpunkt B der Referenzkennlinie K _{R} ist.

Überschreitet der Flüssigkeitsverlust L den mit dem jeweiligen Testvolumen V _{T} erfassbaren Flüssigkeitsverlust, so befindet sich der zugehörige Messpunkt P im nicht-linearen Bereich der zugehörigen Diagnose-Kennlinie K. Es tritt damit eine sehr deutliche Abweichung von dem jeweiligen Referenzdruck p_{R} auf, die umso größer ist, je weiter der Flüssigkeitsverlust L den erfassbaren Flüssigkeitsverlust überschreitet. Nimmt man den kleinsten erfassbaren Flüssigkeitsverlust als Bezugsgröße an, so ist die Größe der Abweichung zwischen dem jeweiligen Referenzdruck p_{R} und dem bei Erreichen des Testvolumens V_{T} gemessenen Druck ein Maß für die Größe des Flüssigkeitsverlustes L. Überschreitet der Flüssigkeitsverlust L den mit dem jeweiligen Testvolumen V_{T} erfassbaren Flüssigkeitsverlust, so ist auch hier durch einen entsprechenden Vergleich mit einer oder mehreren Referenzkennlinien oder -werten eine Quantifizierung des Flüssigkeitsverlustes L möglich.

Auch hier werden die Diagnosen vorzugsweise wiederkehrend ausgeführt, und es wird ein zeitlicher Verlauf der gegebenenfalls eingetretenen Flüssigkeitsverluste bestimmt, anhand dessen Vorhersagen über die Zuverlässigkeit des Messaufnehmers, dessen zu erwartende Lebensdauer und/oder einen Wartungs- oder Austauschbedarf abgeleitet werden.

Selbstverständlich ist das zuletzt genannte Verfahren auch auf mehrere verschiedene Testvolumen V_{T} erweiterbar. [0103] **Tabelle 1**

| | |
|---|---|
| 1 | Druckmesskammer |
| 3 | Drucksensor |
| 5 | Druckmittler |
| 7 | Trennmembran |
| 9 | Kapillarleitung |
| 11 | Druckempfangskammer |
| 13 | Membrantriger |
| 15 | abgeschlossener Innenraum |
| 16 | Membranbett |
| 17 | Flüssigkeit |
| 19 | Durchführungen |
| 21 | Anxhlussleitungen |
| 23 | Befüllöffnung |
| 25 | Prüfelement |
| 25a | mikromechanischer Faltenbalg |
| 25b | Kolben |
| 27 | abgetrennte Ausnehmung |
| 29 | Auswerteeinheit |
| 30 | Messelektronik |
| 31 | Steuereinheit |

## Patentansprüche

1. Druckmessaufnehmer mit
einem in einer Druckmesskammer (1) angeordneten Drucksensor (3),
einem an die Druckmesskammer (1) angeschlossenen Druckmittler (5),
wobei der Druckmittler einen Membranträger (13) mit einer Druckempfangskammer (11) aufweist, nach außen von einer Trennmembran (7) abgeschlossen ist, auf deren Außenseite im Messbetrieb ein zu messender Druck (p_{M}) einwirkbar ist wobei der Membranträger (13) ein Membranbett (16) zum Schutz der Trennmembran (7) vor überlaster aufweist wobei die Trennmembran (7) sich an das Membranbett (16) anlegt, wenn auf die Trennmembran ein Druck p_{M} ein wirkt, der eine vorgegebene Obergrenze übersteigt, wobei der Druckmessaufnehmer einen abgeschlossenen Innenraum (15) umfasst, wobei der Innenraum die Innenräume des Druckmittlers (5) und der Druckmesskammer (1) umfasst, wobei der Innenraum mit einer Druck übertragenden Flüssigkeit (17) gefüllt ist, die im Messbetrieb dazu dient einen auf die Trennmembran (7) einwirkenden Druck auf den Drucksensor (3) zu übertragen, und
einer Vorrichtung zur Diagnose von Flüssigkeitsverlusten (L), die ein in dem abgeschlossenen Innenraum (15) angeordnetes Prüfelement (25) aufweist,
dessen im Innenraum (15) befindliches Außenvolumen (V) zur Diagnose von Flüssigkeitsverlusten (L) reduzierbar ist,
wobei die Vorrichtung zur Diagnose von Flüssigkeitsverlusten (L) eine Auswerteinheit (29) aufweist, die während der Diagnose dazu dient, einen vom Drucksensor (3) gemessenen Druck (p) in Abhängigkeit von einer Volumenreduzierung (ΔV) des Prüfelements (25) zu erfassen, und anhand dieses in Abhängigkeit von der Volumenreduzierung (ΔV) gemessenen Drucks (p) erkennt ob Flüssigkeit (17) ausgetreten ist, **dadurch gekennzeichnet,**
**dass** das Prüfelement (25) eine maximal erzielbare Volumenreduktion (ΔVₘₐₓ) aufweist, wobei die maximal erzielbare Volumenreduktion (ΔVₘₐₓ) in Abhängigkeit von einem zwischen der Trennmembran (7) und deren Membranbett (16) im unbelasteten Zustand eingeschlossenen Flüssigkeitsvolumen so ausgelegt ist, dass die Trennmembran (7) an deren Membranbett (16) anliegt, wenn das Prüfelement (25) sein Minimalvolumen einnimmt.

2. Druckmessaufnehmer nach Anspruch 1, bei dem das Prüfelement (25) ein piezoelektrisches Element umfasst, dessen Volumen durch Anlegen einer elektrischen Spannung reduzierbar ist.

3. Druckmessaufnehmer nach Anspruch 1, bei dem das Prüfelement ein mikromechanischer Faltenbalg (25a) ist.

4. Druckmessaufnehmer nach Anspruch 1, bei dem das Prüfelement einen beweglichen Kolben (25b) umfasst.

5. Verfahren zur Diagnose von Flüssigkeitsverlusten (L) eines Druckmessaufnehmers gemäß einem der vorhergehenden Ansprüche, bei dem das Volumen (V) des Prüfelements (25) solange reduziert wird, bis entweder ein nicht-linearer Abfall des gemessenen Drucks (p) auftritt, oder bis eine Obergrenze (ΔVₘₐₓ) für die Volumenreduktion erreicht wird, und beim Auftreten eines nicht-linearen Abfalls die zugehörige Volumenreduktion (ΔV) mit einem bei intaktem Druckmessaufnehmer aufgezeichneten Referenzwert (ΔV_{R}) verglichen wird, und ein gegebenenfalls eingetretener Flüssigkeitsverlust (L) anhand einer Differenz der zugehörigen Volumenreduktion (ΔV) und des Referenzwertes (ΔV_{R}) quantifiziert wird, **dadurch gekennzeichnet,**
**dass** die maximal erzielbare Volumenreduktion (ΔVₘₐₓ) des Prüfelements (25) in Abhängigkeit von einem zwischen der Trennmembran (7) und deren Membranbett (16) im unbelasteten Zustand eingeschlossenen Flüssigkeitsvolumen so ausgelegt ist, dass die Trennmembran (7) an deren Membranbett (16) anliegt, wenn das Prüfelement (25) sein Minimalvolumen einnimmt.

6. Verfahren nach Anspruch 5, bei dem die Diagnosen wiederkehrend ausgeführt werden, ein zeitlicher Verlauf der gegebenenfalls eingetretenen Flüssigkeitsverluste (L) bestimmt wird, und anhand dieses Verlaufs Vorhersagen über die Zuverlässigkeit des Messaufnehmers, dessen zu erwartende Lebensdauer urd/oder einen Wartungs- oder Austauschbedarf abgeleitet werden.

## Claims

1. Pressure sensor with:
a pressure sensor (3) arranged in a pressure measuring chamber (1),
a diaphragm seal (5) connected to the pressure measuring chamber (1),
where the diaphragm seal exhibits a membrane carrier (13) with a pressure reception chamber (11), is sealed to the outside with a process isolating diaphragm (7) on the outside of which a pressure (P_{M}) to be measured during operation can be applied, **characterized in that** the membrane carrier (13) exhibits a membrane bed (16) to protect the process isolating diaphragm (7) from overload. Here, the process isolating diaphragm (7) bears on the membrane bed (16) if a pressure (P_{M}) - which exceeds a specific upper limit - is applied to the process isolating diaphragm. The pressure sensor comprises a sealed inner compartment (15), whereby the inner compartment comprises the inner compartments of the diaphragm seal (5) and the pressure measuring chamber (1), whereby the inner compartment is filled with a liquid (17) that transfers pressure, said liquid used to transfer a pressure acting on the process isolating diaphragm (7) to the pressure sensor (3).
a unit for diagnosing liquid loss (L) which exhibits a testing element (25) which is arranged in the sealed inner compartment (15) and whose outer volume (V) in the inner compartment (15) can be reduced to diagnose liquid loss (L)
whereby the unit for diagnosing liquid loss (L) exhibits an evaluation unit (29) which is used during diagnosis to record a pressure (p) measured by the pressure sensor (3) depending on a reduction in volume (ΔV) of the testing element (25). On the basis of this pressure (p) which is measured depending on the reduction in volume (ΔV) the evaluation unit detects whether liquid (17) has leaked, **characterized in that**,
the testing element (25) exhibits a maximum reduction in volume (ΔVₘₐₓ) that can be achieved, whereby the maximum reduction in volume (ΔVₘₐₓ) that depends on a liquid volume contained between the process isolating diaphragm (7) and the membrane bed (16) in an unloaded state is designed in such a way that the process isolating diaphragm (7) bears on the membrane bed (16) when the testing element (25) assumes its minimum volume.

2. Pressure sensor as per Claim 1, **characterized in that** the testing element (25) comprises a piezoelectric element whose volume can be reduced by applying an electrical voltage.

3. Pressure sensor as per Claim 1, **characterized in that** the testing element (25) is a micromechanical bellows (25a).

4. Pressure sensor as per Claim 1, **characterized in that** the testing element (25) is a mobile piston (25b).

5. Method of diagnosing loss of liquid (L) in a pressure sensor in accordance with one of the previous claims where the volume (V) of the testing element (25) is reduced until a non-linear drop in the measured pressure (p) occurs, or until an upper limit (ΔVₘₐₓ) is reached for the volume reduction, and when a non-linear drop occurs the related reduction in volume (ΔV) is compared to a reference value (ΔV_{R}) recorded when the pressure sensor was intact, and any loss in liquid (L) is quantified based on a difference between the related reduction in volume (ΔV) and the reference value (ΔV_{R}), **characterized in that**
the maximum possible reduction in volume (ΔVₘₐₓ) of the testing element (25) depending on a liquid volume contained between the process isolating diaphragm (7) and the membrane bed (16) in an unloaded state is designed in such a way that the process isolating diaphragm (7) bears on the membrane bed (16) if the testing element (25) assumes its minimum volume.

6. Method as per Claim 5 in which the diagnosis is performed on a recurring basis, the progress of any loss in liquid (L) is determined, and on the basis of this forecasts can be made regarding the reliability of the sensor, the expected service life and/or any need to service or replace the sensor.

## Revendications

1. Transmetteur de pression avec
un capteur de pression (3) disposé dans une chambre de mesure de pression (1),
un séparateur (5) raccordé à la chambre de mesure de pression (1),
le séparateur comportant un support de membrane (13) avec une chambre de réception de pression (11), lequel séparateur est obturé vers l'extérieur par une membrane de séparation (7) sur la face extérieure de laquelle, en mode de mesure, une pression à mesurer (p_{M}) peut être appliquée, le support de membrane (13) comportant un lit de membrane (16) en guise de protection contre la surcharge de la membrane de séparation, la membrane de séparation (7) reposant contre le lit de membrane (16) lorsqu'une pression p_{M} agissant sur la membrane de séparation dépasse une limite supérieure prédéfinie, le transmetteur de pression comprenant un espace intérieur (15) hermétique, l'espace intérieur comprenant les espaces intérieurs du séparateur (5) et de la chambre de mesure de pression (1), l'espace intérieur étant rempli par un liquide (17) transmettant la pression, liquide qui, en mode de mesure, permet de transmettre au capteur de pression (3) une pression agissant sur la membrane de séparation (7), et
un dispositif destiné au diagnostic de pertes de liquide (L), qui comporte un élément de contrôle (25) disposé dans l'espace intérieur (15) hermétique, dont le volume extérieur (V) se trouvant dans l'espace intérieur (15) peut être réduit à des fins de diagnostic de pertes de liquide (L),
le dispositif comportant en vue du diagnostic de pertes de liquide (L) une unité d'exploitation (29) qui, pendant le diagnostic, sert à déterminer une pression (p) mesurée par le capteur de pression (3) en fonction d'une réduction de volume (ΔV) de l'élément de contrôle (25) et, au moyen de la pression mesurée (p) en fonction de la réduction du volume (ΔV), détecte une éventuelle fuite de liquide (17), **caractérisé en ce**
**que** l'élément de contrôle (25) présente une réduction de volume (ΔVmax) maximale atteignable, la réduction de volume maximale atteignable (ΔVmax) étant conçue en fonction d'un volume de liquide enfermé à l'état à vide entre la membrane de séparation (7) et son lit de membrane (16), de telle manière que la membrane de séparation (7) repose contre son lit de membrane (16) lorsque l'élément de contrôle (25) adopte son volume minimal.

2. Transmetteur de pression selon la revendication 1, pour lequel l'élément de contrôle (25) comprend un élément piézoélectrique, dont le volume peut être réduit par l'application d'une tension électrique.

3. Transmetteur de pression selon la revendication 1, pour lequel l'élément de contrôle est un soufflet micromécanique (25a).

4. Transmetteur de pression selon la revendication 1, pour lequel l'élément de contrôle comprend un piston mobile (25b).

5. Procédé destiné au diagnostic de pertes de liquide (L) d'un transmetteur de pression selon l'une des revendications précédentes, pour lequel le volume (V) de l'élément de contrôle (25) est réduit jusqu'à ce qu'apparaisse une chute non linéaire de la pression mesurée (p) ou jusqu'à ce que soit atteinte une limite supérieure (ΔVmax) pour la réduction du volume et, en cas d'apparition d'une chute non linéaire, la réduction de volume (ΔV) correspondante est comparée avec une valeur de référence (ΔV_{R}) enregistrée pour un transmetteur de pression intact, et une perte de liquide (L) survenant éventuellement est quantifiée au moyen d'une différence de la réduction de volume (ΔV) correspondante et de la valeur de référence (ΔV_{R}), **caractérisé en ce**
**que** la réduction de volume maximale atteignable (ΔVmax) de l'élément de contrôle (25) est conçue en fonction d'un volume de liquide enfermé à l'état à vide entre la membrane de séparation (7) et son lit de membrane (16), de telle manière que la membrane de séparation (7) repose contre son lit de membrane (16) lorsque l'élément de contrôle (25) adopte son volume minimal.

6. Procédé selon la revendication 5, pour lequel les diagnostics sont exécutés de façon récurrente, une courbe temporelle des pertes de liquide (L) éventuellement survenues est déterminée et, sur la base de cette courbe, sont déduits des pronostics sur la fiabilité du transmetteur de mesure, sur sa durée de vie prévisible et/ou un besoin de maintenance ou de remplacement.
